# EUROPEAN PATENT SPECIFICATION

(11) **EP 2 532 461 B1**
(45) Date of publication and mention of the grant of the patent: **09.08.2017**
(21) Application number: 11169510.2
(22) Date of filing: 10.06.2011
(51) Int. Cl.: B23B 27/14, B23B 51/10

(54) **Cutting insert having a plurality of cutting elements thereon and cutting tool therefor**
Schneideinsatz mit mehreren Schneidelementen daran und Schneidwerkzeug dafür
Insert de découpe doté de plusieurs éléments de découpage et outil de découpe correspondant

(43) Date of publication of application: 12.12.2012
(73) Proprietor: Seco Tools AB, 737 82 Fagersta (SE)
(72) Inventor: Jansson, Mikael, 774 67 Avesta (SE)
(74) Representative: Simu, Urban

(56) References cited:
- DE-B- 1 271 503
- DE-U1-202009 005 609
- JP-A- 1 092 006
- US-A- 1 926 531
- US-A- 3 878 905
- US-A- 5 004 379
- US-A1- 2003 156 910

## Description

### BACKGROUND AND SUMMARY

The present invention relates generally to a cutting insert and a cutting tool and, more particularly, to such cutting inserts having a plurality of cutting elements thereon and cutting tools using such inserts.

It is desirable to provide cutting tools for metal chip removal with one or more replaceable cutting inserts having one or more cutting edges thereon that can be mounted to a toolholder and indexed to active positions and, after, becoming worn or damaged, can be moved to inactive positions so that other, unworn and undamaged cutting edges can be indexed to the active positions. Indexable cutting inserts are well known in machining operations such as rotating tool applications such as milling, drilling, and boring, and in turning applications. DE1271503 discloses a rotating tool with an insert that is indexable to two positions but, because of its configuration, cannot be adapted for indexing to additional positions, and can only be securely mounted in those two positions. However, in some applications, such as where it is desired to drill a relatively small diameter hole, conventional indexable inserts mounted on toolholders are not practical. It is desirable to provide cutting inserts and rotating cutting tools that facilitate provision of indexable cutting inserts in wide variety of applications. US5004379, on which the preamble of claims 1 and 10 are based, discloses a cutting insert for a turning tool, the insert having three or more cutting edges, however, accurate positioning of the insert relative to a toolholder is complex.

According to an aspect of the present invention, a cutting insert is provided in accordance with the characterizing portion of claim 1.

According to another aspect of the present invention, a cutting tool is provided in accordance with the characterizing portion of claim 10.

### BRIEF DESCRIPTION OF THE DRAWINGS

The features and advantages of the present invention are well understood by reading the following detailed description in conjunction with the drawings in which like numerals indicate similar elements and in which:
FIGS. 1A and 1B are side and bottom views of a cutting tool according to an aspect of the present invention;
FIGS. 2A and 2B are perspective views of a cutting insert according to an aspect of the present invention;
FIG. 3 is a schematic side view of a cutting insert not in accordance with the present invention;
FIG. 4 is a schematic side view of a cutting insert not in accordance with the present invention;
FIG. 5 is a schematic side view of a cutting insert according to another aspect of the present invention;
FIG. 6 is a schematic side view of a cutting insert not in accordance with the present invention;
FIG. 7 is a schematic side view of a cutting insert not in accordance with the present invention; and
FIG. 8 is a schematic side view of a cutting insert according to another aspect of the present invention.

### DETAILED DESCRIPTION

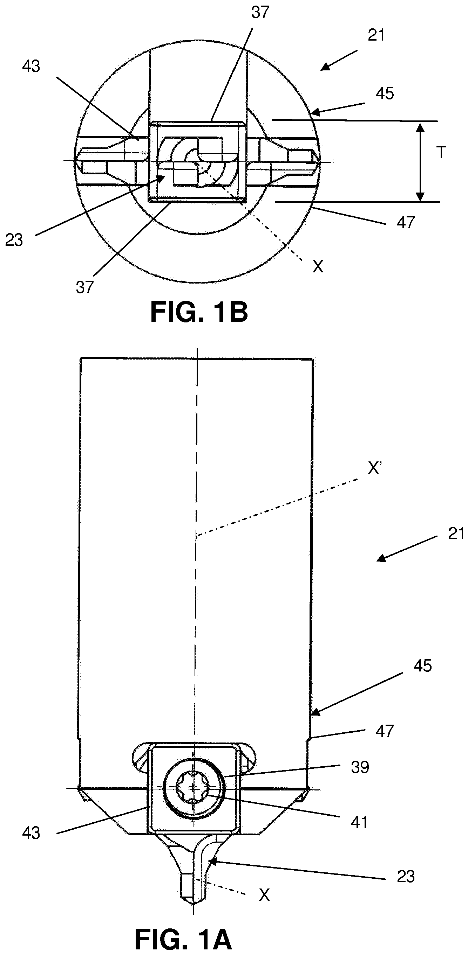

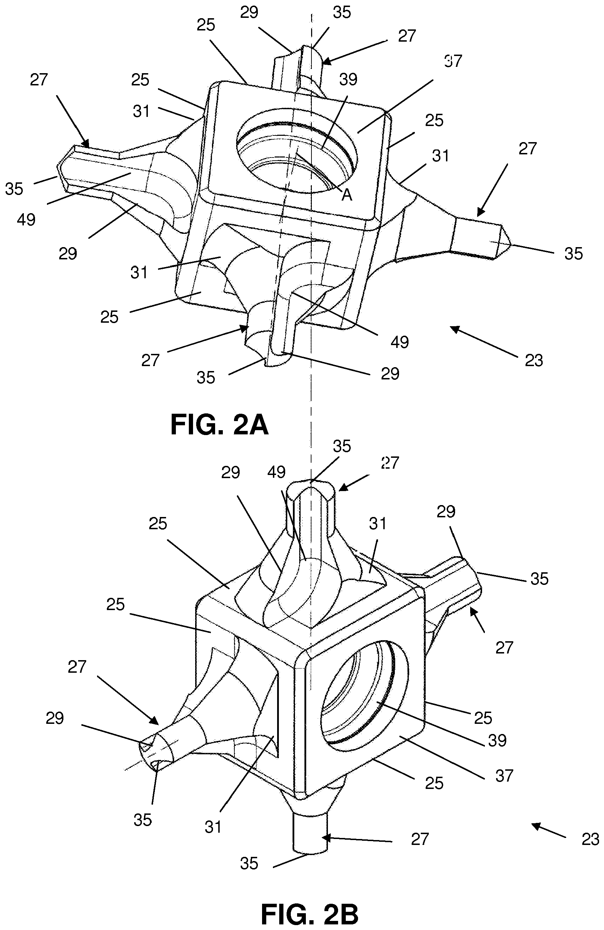

A cutting tool 21 according to an aspect of the present invention is shown in FIGS. 1A and 1B and includes a cutting insert 23 according to a further aspect of the present invention. The cutting insert 23, an embodiment of which is shown in FIGS. 2A and 2B, comprises at least one first insert supporting surface 25 (four shown in the embodiment of FIGS. 2A-2B) and a plurality of cutting elements 27. An insert supporting surface is defined as a surface that is designed to support the insert against an abutment surface, usually on a toolholder and it may be continuous, e.g. by being planar or being smoothly curved. An insert supporting surface is distinguished from an ordinary surface particularly in that the shape of the surface will ordinarily correspond with the shape of an abutment surface, and in that a location of the insert supporting surface relative to the cutting edge(s) of the insert is important to ensure proper positioning of the cutting edge when the insert supporting surface supports the insert by abutting against an abutment surface.

Each cutting element 27 comprises at least one cutting edge 29. Each cutting element 27 projects outwardly at its base 31 from the at least one first insert supporting surface 25 to a tip 35 of the cutting element remote from the at least one first insert supporting surface.

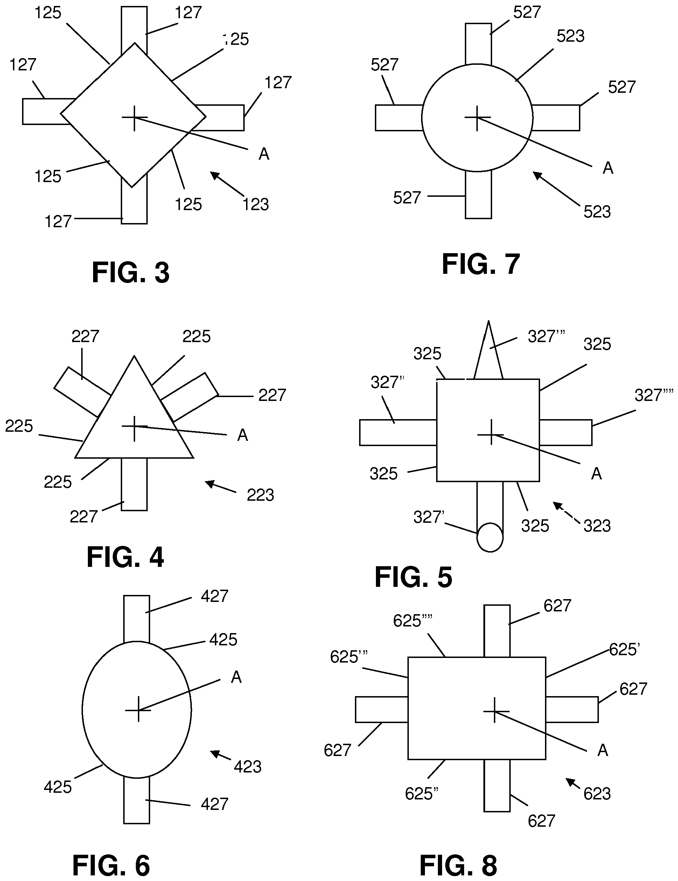

In a variety of embodiments such as are shown in FIGS. 2A-2B, 5 and 8 the cutting insert 23, 323 and 623 comprises a plurality of first insert supporting surfaces 25, 325 and 625' (and 625",625"',625"") respectively. The embodiments of FIGS. 2A-2B, 5 and 8 show cutting inserts 23, 323, and 623 with four first insert supporting surfaces 25, 325, and 625' (and 625", 625"', 625""); FIG. 4 shows an exemplary cutting insert, not in accordance with the present invention 223 with three insert supporting surfaces 225; and FIG. 6 shows an exemplary cutting insert, not in accordance with the present invention 423 with two (elliptical) first insert supporting surfaces. FIG. 7 shows an an exemplary cutting insert, not in accordance with the present invention of a cutting insert 523 with a single first insert supporting surface 525 and a plurality of cutting elements 527 arranged around an indexing axis A of the cutting insert.

In each embodiment of the cutting insert 23, 323 and 623, the plurality of first insert supporting surfaces 25, 325 and 625', 625", 625"', 625"" and the plurality of cutting elements 27, 327' (and 327", 327"', and 327""), and 627 on the inserts can be arranged around an indexing axis A of the cutting insert, although it is not necessary that the first insert supporting surfaces or the cutting elements be arranged around an indexing axis. Each of the cutting elements 27, 327', 327", 327"', 327"" is substantially centered on a corresponding one of the plurality of first insert supporting surfaces 25 and 325 in the thickness T direction of the cutting insert. Stated another way, each of the cutting elements 27 and 327', 327", 327'", 327"" may be disposed substantially in about a center of a corresponding one of the plurality of first insert supporting surfaces 25, and 325 in a thickness T direction. The thickness T is defined as the distance between the second insert supporting surfaces 37.

Each of the cutting elements 27, 327', 327", 327"', 327"" may be spaced from the at least two second insert supporting surfaces 37. Each of the cutting inserts 23 and 523 show each of the one or more first insert supporting surfaces arranged equidistantly from the indexing axis A of the cutting insert, however, as seen in the embodiment of FIG. 8, it will be appreciated that a cutting insert 623 might have one or more of a plurality of first insert supporting surfaces 625', 625", 625"', and 625"" arranged at different distances from an indexing axis A.

All of the cutting inserts 23, 523, and 623 shown in FIGS. 2A-2B and 8 have cutting elements 27 and 627 that are identical. If desired, however, a cutting insert 323 as shown in FIG. 5 can have one or more cutting elements 327', 327", 327"', and 327"" that differ from other ones of the plurality of cutting elements.

In the cutting inserts 23 and 323 shown in FIGS. 2A-2B and 5, each of the cutting elements 27, and 327' (and 327", 327"', and 327""), is shown disposed substantially in a center of a corresponding one of a plurality of first insert supporting surfaces 25, 325. However, as seen in, figure 8, one or more of the cutting elements 627 can be disposed remote from a center of a first insert supporting surface 625" and 625"".

As seen with reference to the insert 23 shown in FIGS. 2A and 2B, the insert includes at least two second insert supporting surfaces 37 extending transverse to an indexing axis A of the cutting insert. The second insert supporting surfaces 37 are illustrated as extending perpendicularly to the indexing axis A, and as being flat, however, it is not necessary that they extend perpendicularly to the indexing axis or that they be flat.

The insert 23 further comprises a through hole 39 extending between the at least two second insert supporting surfaces 37. As seen in FIG. 1A, the through hole 39 can be used to receive a mounting screw 41 for mounting the insert 23 relative to a recess 43 in a toolholder 45 of the cutting tool 21.

In the insert 23 shown in FIGS. 2A-B, each of the cutting elements 27 is substantially surrounded by a corresponding one of the plurality of first insert supporting surfaces 25. However, it will be appreciated that the first insert supporting surface substantially surrounds a particular cutting element.

The cutting tool 21 shown in FIGS. 1A and 1B comprises a toolholder 45 having at least one insert-receiving recess 43 and at least one cutting insert 23 mounted in the at least one insert-receiving recess. If desired, the cutting tool might have a plurality of recesses and a plurality of inserts mounted in the recesses. If the cutting tool comprises a plurality of recesses, not all of the cutting inserts provided in the recesses need to be the same type of insert.

The cutting tool 21 shown in FIGS. 1A and 1B is a stationary tool and, more particularly, a drilling tool with cutting elements 27 in the form of counterbore elements, such as dowel hole drill tips. It will be appreciated, however, that a cutting tool according to an aspect of the present invention might be a rotating tool such as a milling tool or another type of tool, such as a turning tool. In the cutting tool 21 shown in FIGS. 1A and 1B, the at least one cutting insert 23 is mounted in the at least one insert-receiving recess 43 so that at least one cutting element 27 is in an active position and a central axis X of the at least one active cutting element is substantially coaxial with an axis of rotation X' the cutting tool. Other ones of the cutting element 27 are in inactive positions. The inactive cutting elements 27 can be disposed inside of an outer peripheral surface 47 of the toolholder 37 which can facilitate avoiding damage to the inactive cutting elements.

The cutting insert 23 shown in FIGS. 2A and 2B includes cutting edges 29 proximate the tips 35 of the cutting elements 27 and extending down to the base 31 of the element at the first insert supporting surface 25. The cutting elements 27 of the cutting insert 23 further comprise one or more flutes 49 extending from the tip 35 to the base 31 of the cutting elements. Other embodiments of the cutting insert might include a cutting edge only at a top or a side of the cutting element, and might include a chip breaker (not shown) to facilitate breakage and/or removal of chips.

The cutting insert 23 can be made of any suitable material, such as a sintered cemented tungsten carbide material.

While this invention has been illustrated and described in accordance with a preferred embodiment, it is recognized that variations and changes may be made therein without departing from the invention as set forth in the claims.

## Claims

1. A cutting insert (23; 123; 323; 523) for a cutting tool, the insert comprising:
a plurality of first insert supporting surfaces (25; 325); and
a plurality of cutting elements (27; 327', 327", 327"', 327"") each cutting element comprising at least one cutting edge (29), each cutting element projecting outwardly at a base (31) of the cutting element from the at least one first insert supporting surface (25; 325; 525) to a tip (35) of the cutting element remote from the at least one first insert supporting surface (25; 325; 525) each of the cutting elements (27; 327'; 327"; 327"'; 327"") is substantially centered on a corresponding one of the plurality of first insert supporting surfaces (25; 325) in a thickness (T) direction of the cutting insert, wherein there are four cutting elements (27; 327', 327", 327"', 327"";), at least two second insert supporting surfaces (37) extend transverse to an indexing axis (A) of the cutting insert, a through hole (39) extending between the at least two second insert supporting surfaces (37),
**characterized in that** each of the cutting elements (27; 327', 327", 327"', 327"";) is substantially surrounded by a corresponding one of the plurality of first insert supporting surfaces (25; 325, 625',625",625"'.625"").

2. The cutting insert (23; 323) as set forth in claim 1, **characterized in that** the plurality of first insert supporting surfaces are arranged around an indexing axis (A) of the cutting insert.

3. The cutting insert (23; 323) as set forth in any of claims 1 and 2, **characterized in that** each of the plurality of first insert supporting surfaces (25; 325) is arranged equidistantly from an indexing axis (A) of the cutting insert.

4. The cutting insert (23; 323) as set forth in any of claims 1-3, **characterized in that** the plurality of cutting elements (27; 327',327",327"',327"") are arranged around an indexing axis (A) of the cutting insert.

5. The cutting insert (23; 323) as set forth in any of claims 1-4, **characterized in that** each of the plurality of cutting elements (27; 327',327",327"',327"") is arranged equidistantly from an indexing axis (A) of the cutting insert.

6. The cutting insert (23) as set forth in any of claims 1-5, **characterized in that** each of the cutting elements (27) is identical.

7. The cutting insert (23; 323) as set forth in any of claims 1-5, **characterized in that** each of the cutting elements (27; 327', 327", 327"', 327"") is spaced from the at least two second insert supporting surfaces (37).

8. The cutting insert as set forth in any of claims 1-6, **characterized in that** the cutting element of the cutting insert comprises one or more flutes (49) extending from the tip (35) to a base (31) of the cutting element.

9. The cutting insert as set forth in any of claims 1-8, **characterized in that** the cutting element (27; 327',327",327"',327"") is a drill.

10. A cutting tool (21) **characterized in that** it comprises a toolholder (45) having at least one insert-receiving recess (43) and at least one cutting insert (23; 323) as set forth in any of claims 1-10 mounted in the at least one insert-receiving recess.

11. The cutting tool (21) as set forth in claim 10, **characterized in that** the at least one cutting insert (23; 323) is mounted in the at least one insert-receiving recess (43) so that at least one cutting element (27) is in an active position and a central axis (X) of the at least one active cutting element (27) is substantially coaxial with an axis of rotation (X') of the cutting tool (21).

12. The cutting tool (21) as set forth in any of claims 10-11, **characterized in that** the at least one cutting insert (23; 323) is mounted in the at least one insert-receiving recess (43) so that at least one cutting element (27) is in an active position and at least one cutting element (27) is in an inactive position, and the at least one inactive cutting element is disposed inside of an outer peripheral surface (47) of the toolholder (45).

## Patentansprüche

1. Schneideinsatz (23, 123, 323, 523) für ein Schneidwerkzeug, wobei der Einsatz aufweist:
eine Mehrzahl von ersten Stützflächen (25, 325) des Einsatzes und eine Mehrzahl von Schneidelementen (27, 327', 327", 327"', 327""),
wobei jedes Schneidelement zumindest eine Schneidkante (29) aufweist und jedes Schneidelement von seiner Basis (31) aus von der zumindest einen ersten Stützfläche (25, 325, 525) des Einsatzes zu einer Spitze (35) des Schneidelementes, welches von der zumindest einen ersten Stützflächen (25, 325, 525) des Einsatzes entfernt liegt, nach außen vorsteht, wobei jedes der Schneidelemente (27, 327', 327", 327"', 327"") im Wesentlichen auf einer entsprechenden der Mehrzahl von ersten Stützflächen (25, 325) des Einsatzes in Richtung der Dicke (T) des Schneideinsatzes zentriert ist, wobei vier Schneidelemente (27, 327', 327", 327"', 327"") vorgesehen sind,
wobei zumindest zwei zweite Stützflächen (37) des Einsatzes sich quer zu einer Indexierachse (A) des Schneideinsatzes erstrecken, wobei eine Durchgangsbohrung (39) sich zwischen den zumindest zwei Stützflächen (37) des Einsatzes erstreckt,
**dadurch gekennzeichnet, dass** jedes der Schneidelemente (27, 327', 327", 327"', 327"") im Wesentlichen durch eine entsprechende aus der Mehrzahl von ersten den Einsatz schützenden Flächen (25, 325, 626' 625", 625"', 625"") umgeben ist.

2. Schneideinsatz (23, 323) nach Anspruch 1, **dadurch gekennzeichnet, dass** die Mehrzahl von ersten Stützflächen des Einsatzes um eine Indexierachse (A) des Schneideinsatzes herum angeordnet sind.

3. Schneideinsatz (23, 323) nach einem der Ansprüche 1 oder 2, **dadurch gekennzeichnet, dass** jede aus der Mehrzahl von ersten Stützflächen (25, 325) des Einsatzes unter dem gleichen Abstand von einer Indexierachse (A) des Schneideinsatzes angeordnet ist.

4. Schneideinsatz (23, 323) nach einem der Ansprüche 1 bis 3, **dadurch gekennzeichnet, dass** die Mehrzahl von Schneidelementen (27, 327', 327", 327"', 327"") um eine Indexierachse (A) des Schneideinsatzes herum angeordnet sind.

5. Schneideinsatz (23, 323) nach einem der Ansprüche 1 bis 4, **dadurch gekennzeichnet, dass** jedes der Mehrzahl von Schneidelementen (27 , 327', 327", 327"', 327"") unter dem gleichen Abstand von einer Indexierachse (A) des Schneideinsatzes angeordnet ist.

6. Schneideinsatz (23, 323) nach einem der Ansprüche 1 bis 5, **dadurch gekennzeichnet, dass** jedes der Schneidelemente (27) identisch ist.

7. Schneideinsatz (23, 323) nach einem der Ansprüche 1 bis 5, **dadurch gekennzeichnet, dass** jedes der Schneidelemente (27, 327', 327", 327"', 327"") von den zumindest zwei zweiten Stützflächen des Einsatzes beabstandet ist.

8. Schneideinsatz (23, 323) nach einem der Ansprüche 1 bis 6, **dadurch gekennzeichnet, dass** das Schneidelement des Schneideinsatzes eine oder mehrere Spannuten (49) aufweist, die sich von der Spitze (35) zu einem Basisteil (31) der Schneidelemente erstrecken.

9. Schneideinsatz (23, 323) nach einem der Ansprüche 1 bis 8, **dadurch gekennzeichnet, dass** das Schneidelement (27) ein Bohrer ist.

10. Schneidwerkzeug (21) **dadurch gekennzeichnet, dass** es einen Werkzeughalter (45) aufweist, der zumindest eine einen Einsatz aufnehmende Aussparung (43) und zumindest einen Schneideinsatz (23, 323) nach einem der Ansprüche 1 bis 10 aufweist.

11. Schneidwerkzeug (21) nach Anspruch 10, **dadurch gekennzeichnet, dass** der zumindest eine Schneideinsatz (23, 323) in der zumindest einen einen Einsatz aufnehmenden Aussparung (43) montiert ist, sodass das zumindest eine Schneidelement (27) in einer aktiven Position ist und dass eine zentrale Achse (X) des zumindest einen aktiven Schneidelementes (27) im Wesentlichen koaxial mit einer Rotationsachse (X') des Schneidwerkzeuges (21) ist.

12. Schneidwerkzeug (21) nach einem der Ansprüche 10 bis 11, **dadurch gekennzeichnet, dass** der zumindest eine Schneideinsatz (23, 323) in der zumindest einen einen Einsatz aufnehmenden Aussparung (43) montiert ist, sodass das zumindest eine Schneidelement (27) in einer aktiven Position ist und zumindest ein Schneidelement (27) in einer inaktiven Position ist, und wobei das zumindest eine inaktive Schneidelement innerhalbe einer äußeren Umfangsfläche (47) des Werkzeughalters (45) angeordnet ist.

## Revendications

1. Plaquette de coupe (23 ; 123 ; 323 ; 523) pour un outil de coupe, la plaquette comprenant :
une pluralité de premières surfaces de support de plaquette (25 ; 325) ; et
une pluralité d'éléments de coupe (27 ; 327', 327", 327"', 327"") chaque élément de coupe comprenant au moins une arête de coupe (29), chaque élément de coupe dépassant vers l'extérieur au niveau d'une base (31) de l'élément de coupe par rapport à la au moins une première surface de support de plaquette (25 ; 325 ; 525) jusqu'à une pointe (35) de l'élément de coupe éloigné par rapport à la au moins une première surface de support de plaquette (25 ; 325 ; 525) chacun des éléments de coupe (27 ; 327', 327", 327"', 327"") est substantiellement centré sur une surface correspondante de la pluralité de premières surfaces de support de plaquette (25 ; 325) dans une direction d'épaisseur (T) de la plaquette de coupe, dans laquelle il existe quatre éléments de coupe (27 ; 327', 327", 327"', 327""), au moins deux deuxièmes surfaces de support de plaquette (37) s'étendent transversalement par rapport à un axe d'indexation (A) de la plaquette de coupe, un trou traversant (39) s'étendant entre les au moins deux deuxièmes surfaces de support de plaquette (37),
**caractérisée en ce que** chacun des éléments de coupe (27 ; 327', 327", 327"', 327"") est substantiellement entouré par une surface correspondante de la pluralité de premières surfaces de support de plaquette (25 ; 325, 625', 625", 625"', 625"").

2. Plaquette de coupe (23 ; 323) selon la revendication 1, **caractérisée en ce que** la pluralité de premières surfaces de support de plaquette sont disposées autour d'un axe d'indexation (A) de la plaquette de coupe.

3. Plaquette de coupe (23 ; 323) selon l'une quelconque des revendications 1 et 2, **caractérisée en ce que** chaque surface de la pluralité de premières surfaces de support de plaquette (25 ; 325) est disposée de manière équidistante par rapport à un axe d'indexation (A) de la plaquette de coupe.

4. Plaquette de coupe (23 ; 323) selon l'une quelconque des revendications 1 à 3, **caractérisée en ce que** la pluralité d'éléments de coupe (27 ; 327', 327", 327"', 327"") sont disposés autour d'un axe d'indexation (A) de la plaquette de coupe.

5. Plaquette de coupe (23 ; 323) selon l'une quelconque des revendications 1 à 4, **caractérisée en ce que** chaque élément de la pluralité d'éléments de coupe (27 ; 327', 327", 327"', 327"") est disposé de manière équidistante par rapport à un axe d'indexation (A) de la plaquette de coupe.

6. Plaquette de coupe (23) selon l'une quelconque des revendications 1 à 5, **caractérisée en ce que** chacun des éléments de coupe (27) est identique.

7. Plaquette de coupe (23 ; 323) selon l'une quelconque des revendications 1 à 5, **caractérisée en ce que** chacun des éléments de coupe (27 ; 327', 327", 327"', 327"") est écarté par rapport aux au moins deux deuxièmes surfaces de support de plaquette (37).

8. Plaquette de coupe selon l'une quelconque des revendications 1 à 6, **caractérisée en ce que** l'élément de coupe de la plaquette de coupe comprend une ou plusieurs goujures (49) s'étendant à partir de la pointe (35) jusqu'à une base (31) de l'élément de coupe.

9. Plaquette de coupe selon l'une quelconque des revendications 1 à 8, **caractérisée en ce que** l'élément de coupe (27 ; 327', 327", 327"', 327"") est un foret.

10. Outil de coupe (21) **caractérisé en ce qu'**il comprend un porte-outil (45) ayant au moins un logement de réception de plaquette (43) et au moins une plaquette de coupe (23 ; 323) selon l'une quelconque des revendications 1 à 10 montée dans le au moins un logement de réception de plaquette.

11. Outil de coupe (21) selon la revendication 10, **caractérisé en ce que** la au moins une plaquette de coupe (23 ; 323) est montée dans le au moins un logement de réception de plaquette (43) de sorte qu'au moins un élément de coupe (27) soit dans une position active et qu'un axe central (X) du au moins un élément de coupe (27) actif soit substantiellement coaxial avec un axe de rotation (X') de l'outil de coupe (21).

12. Outil de coupe (21) selon l'une quelconque des revendications 10 et 11, **caractérisé en ce que** la au moins une plaquette de coupe (23 ; 323) est montée dans le au moins un logement de réception de plaquette (43) de sorte qu'au moins un élément de coupe (27) soit dans une position active et qu'au moins un élément de coupe (27) soit dans une position inactive, et le au moins un élément de coupe inactif est disposé à l'intérieur d'une surface périphérique extérieure (47) du porte-outil (45).
